# EUROPEAN PATENT SPECIFICATION

(11) **EP 0 990 559 B1**
(45) Date of publication and mention of the grant of the patent: **03.11.2004**
(21) Application number: 99119380.6
(22) Date of filing: 29.09.1999
(51) Int. Cl.: B60R 9/042, B60P 7/08

(54) **Transport device for items of equipment in rescue vehicles**
Transportvorrichtung für Ausrüstungsgegenstände in einem Rettungsfahrzeug
Dispositif de transport pour appareillages d'équipement d'une véhicule d'intervention

(30) Priority: 02.10.1998 DE 19845344
(43) Date of publication of application: 05.04.2000
(73) Proprietor: IVECO MAGIRUS AG, D-89079 Ulm (DE)
(72) Inventor: Seidel, Wolfgang, 79331 Emmendingen (DE); Menzel, Rainer, 73101 Aichelberg (DE)
(74) Representative: Gervasi, Gemma, Dr.

(56) References cited:
- EP-A- 0 101 054
- EP-A- 0 665 132
- CH-A- 404 121
- US-A- 2 978 153
- US-A- 3 961 715
- US-A- 4 733 898
- US-A- 4 917 430
- US-A- 5 372 289

## Description

The invention relates to a transport device for items of equipment in rescue vehicles or similar, according to the preamble of claim 1.

Rescue vehicles such as fire protection vehicles, for example, are provided, inter alia, to transport the items of equipment required during use. The equipment may for this purpose be stowed in simply formed compartments in the rescue vehicle. In order to enable the equipment to be transported better and more rapidly from the rescue vehicle to the place of use, the items of equipment may also be disposed in box-shaped containers which can be removed from the rescue vehicle. Rail systems which are mounted at the bottom of the transport compartment and on which the container lies during transport are known for this purpose. When it is used the equipment container is drawn out of the transport compartment at the side along the rails and removed from the equipment container

In a known embodiment according to the preamble of claim 1 the equipment container is prevented from slipping along the rails and secured in its transport position by the stops and delivery rollers which are provided at the ends of the rails. In order to remove the container it is raised slightly and drawn out while lying on the delivery roller.

In order to ensure that the equipment container slides easily in the rails, in particular on the horizontal legs thereof, and prevent excessive wear of the rails and the equipment container, both the horizontal legs and the perpendicular legs of the rails are provided at the inner sides, which face the surface of the equipment container, with plastics sections which are usually stuck on. This means that the equipment container does not come into contact with the metallic rail surface during its movement, only with the surface of the plastics sections. The stops and guide devices which are to be provided, such as the delivery rollers, for example, are welded or screwed to the rails.

A rail system formed by rails of this kind is in each case provided individually for a certain type of rescue vehicle and is only to be used with the rescue vehicle for which it was constructed. A different length and different positioning of the stops or delivery rollers are often necessary if the system is used in connection with different rescue vehicles. However it is not possible to subsequently alter these positions, in particular because of anticorrosion measures, where conventional rails are concerned. Instead different rails with different positions for the stops and delivery rollers must be provided. The rails therefore become relatively expensive to manufacture.

From document EP 0 101 054, it is known a luggage transport device for a camping vehicle, wherein the luggage is secured to a pair of rails movable along a corresponding pair of rails trasversely fixed on the roof of the vehicle. Each fixed rail is formed as H section having the end of each vertical leg bent internally to form undercut grooves, the upper groove being provided with a plastic bar formed as a reverse T-shaped section, with a barrel vertical leg. Each movable rail is formed as a similar H section, the lower undercut groove engaging the barrel leg of the plastic bar and a pair of delivery rollers, which are carried by a projection provided at the outer end of the upper portion of the fixed rail, and distanced from the plastic bar. A pair of stop rollers are secured at the inner end of each movable rail for engaging corresponding stop shoulders secured to the outer end of the fixed rail.

The object of the invention is to provide a transport device for items of a box-shaped container for equipment in rescue vehicles or similar, in which it is possible to alter the position of the stops and the guide devices of the rails and thus provide more flexible possibilities for using the rails.

This abject is solved according to the invention by a transport device for items of equipment in rescue vehicles or similar, wherein a box-shaped equipment container (28) is movable along two rails formed as L-sections disposed in a mutual mirror-image fashion, each L-section comprising a horizontal leg and a perpendicular leg, said legs being provided with plastic sections at the respective inner sides facing said container, said rails being also provided with stops for the movement of said container, and with delivery rollers for guiding the movement of said container, characterized in that the inner sides of said legs are provided with respective undercut grooves in which said plastic sections, said stops and said rollers are removably inserted.

Both the stops and the guide devices, as well as any delivery rollers, can be displaced along undercut grooves in the same way as the plastics sections. A rail thus formed allows the position of the stops or guide devices to be individually adapted through displacement along the rail. The plastics sections, which are also to be fitted in the grooves, are to be adapted accordingly in length. If, for example, a rail system is to be used in connection with another rescue vehicle in which there is to be a smaller spacing between the delivery roller and the stop, shorter plastics sections are inserted between the delivery rollers, whose roller blocks are guided in the grooves, and the stops, which are fitted in a comparable manner, so that the stops can be moved in the direction of the roller blocks. The roller block and the stop are appropriately provided with securing devices which enable these devices to be fixed to the rail in the longitudinal direction.

The grooves are preferably formed as dovetail guides, while the stops and/or the guide devices are formed in a corresponding manner for guidance within the grooves.

In a preferred embodiment the stops and the guide devices can be fixed in their position by screws. For this purpose a number of through-holes or threaded holes are provided in the undercut grooves, while the stops and the guide devices are likewise provided with through-holes or threaded holes. For example, the through-holes are made in the grooves so that screws can be screwed into the stops or guide devices through the rails. It is on the other hand possible to provide the through-holes in a suitable manner in the stops and/or guide devices and screw the screws into the rails.

The rails are preferably formed as L-sections, and the undercut grooves are disposed at the inner sides, which face the equipment container, of both legs of the L-section. Aluminium sections may expediently be used for this purpose. The L-sections are disposed such that the container in each case lies on the horizontal leg of the section and is guided laterally by a perpendicular leg. The rails therefore embrace the two opposite lower longitudinal edges of the container.

The stops are preferably formed as horizontal stop pins provided with undercut base regions which can be inserted in the grooves of the perpendicularly disposed legs of the L-sections. The delivery rollers are preferably mounted in roller blocks which are likewise provided with undercut base regions which can be inserted in the grooves of the horizontally disposed legs of the L-sections.

A preferred embodiment is illustrated in detail in the following on the basis of the drawings, in which:
Figure 1 is a side view of a transport device according to the invention;
Figures 2 and 3 show the transport device from Figure 1, in which the equipment container is in two further movement positions;
Figure 4 is a front view of the transport device from Figure 1;
Figure 5 is a section through the transport device from Figure 1.

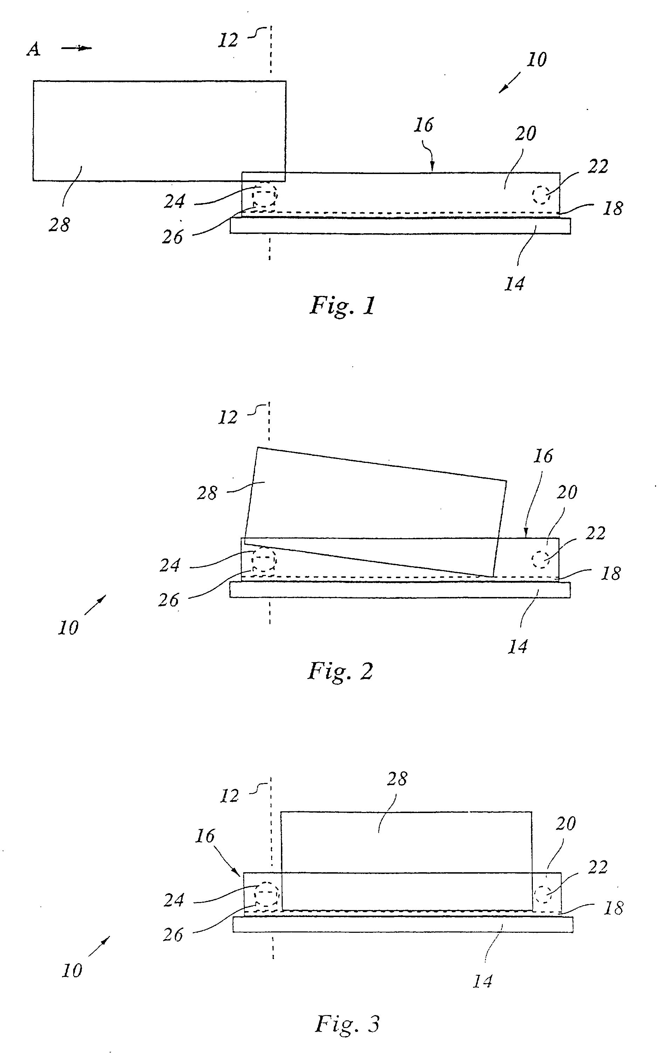

The transport device 10 shown in Figure 1 is provided for transport in a rescue vehicle whose interior is located to the right of the broken line 12 in Figure 1. It comprises a horizontal base plate 14, which is disposed in the interior of the rescue vehicle 12 and on which a pair of rails is fitted. In the perspective selected in Figure 1 the rail 16 which faces the observer conceals the second rail, which is disposed in parallel, of the pair of rails.

The rail 16 is formed as an L-section, wherein one leg 18 of the L lies on the base plate 14 and a leg 20, which is perpendicular to the horizontal leg 18, rises perpendicularly from the base plate. The horizontal leg 18 is concealed in Figure 1 and indicated by a broken line. At the inner end of the perpendicular leg 20 the rail 16 is provided with a horizontal stop pin 22, which in turn is concealed by the perpendicular leg 20 and indicated by a broken line in Figure 1. A delivery roller 24 is provided at the outer end of the rail 16, which roller is rotatably held in a roller block 26 resting on the horizontal leg 18 of the rail 16.

A box-shaped equipment container 28 lies with its inner end on the delivery roller 24. It is held by people in a manner which is not shown at its opposite end. It can move horizontally in the direction of the arrow A towards the stop pin 22 until its centre of gravity passes over the delivery roller 24 and its inner end consequently executes a downward tilting movement. This position is represented in Figure 2. The container therefore lies with its inner end on the horizontal legs 18 of the rails 16 and with its opposite end on the delivery rollers 24. If the container is moved further, its rear end will slide over the delivery roller 24, likewise between the rails 16, so that the container lies horizontally on the horizontal legs 18 of the rails 16 between the stop pin 22 and the delivery roller 24. This is its transport position, which is represented in Figure 3.

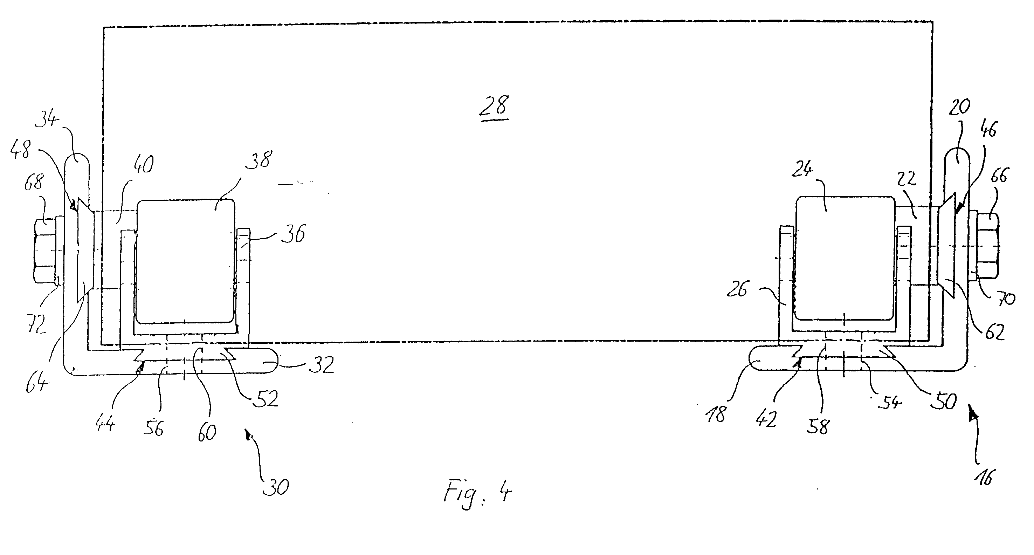

Figure 4 shows the container 28 and the rail 16, provided with the roller block 26, the delivery roller 24 and the stop pin 22, from a viewing direction which corresponds to the direction of movement (arrow A) of the container. This view shows the second rail 30, which is disposed in mirror-image fashion with respect to the rail 16 and is provided in the same way as the rail 16 with a horizontal leg 32, a perpendicular leg 34, a roller block 36, a delivery roller 38 and a horizontal stop pin 40. The container is only indicated diagrammatically by a dot-dash line in Figure 4, while the base plate 14 is not represented in order to provide a clear view.

Both rails 16, 30 are provided at their inner sides, which face the container, with a horizontal dovetail guide 42, 44, which is disposed in the horizontal leg 18, 32, and a perpendicular dovetail guide 46, 48, which is disposed in the perpendicular leg 20, 34. These dovetail guides 42, 44, 46, 48 extend in the longitudinal direction of the rails 16, 30 and can be seen in cross section in Figure 4. The roller blocks 26, 36 are provided with undercut base regions 50, 52, which correspond in shape to the dovetail guides 42, 44, in which they are inserted. The roller blocks 26, 36 can thus be displaced along the horizontal dovetail guides 42, 44. The horizontal legs 18, 32 are also provided with through-holes in the region of the bottoms of the horizontal dovetail guides 42, 44, while the roller blocks 26, 36 are provided with internal threads. The through-holes 54, 56 and the internal threads 58, 60 are indicated diagrammatically in Figure 1.

Flat plastics sections 62, 64 of a trapezoidal cross section are inserted in the perpendicular dovetail guides 46, 48. The horizontal stop pins 22, 40 are also fitted in a way not shown in detail in Figure 4 in the perpendicular dovetail guides 46, 48 in the region behind the plastics sections 62, 64 and secured here by hexagon-head screws 66, 68 and by washers 70, 72.

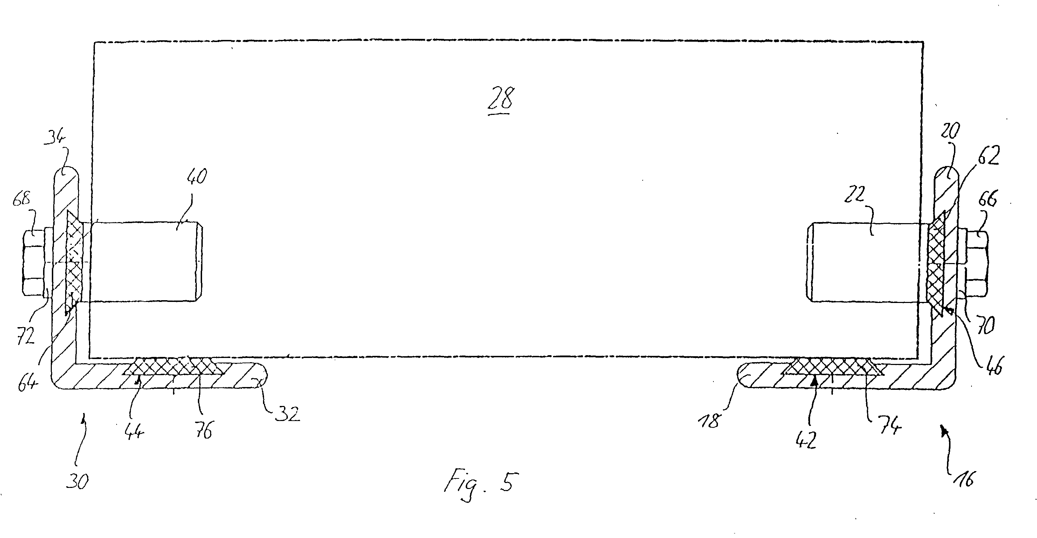

The section shown in Figure 5 extends parallel to the plane of the drawing in Figure 4, i.e. the observer looks in the direction of movement (arrow A in Figure 1) of the container 28. In addition to the elements already described in connection with Figure 4, it can be seen that plastics sections 74, 76 are also inserted in the horizontal dovetail guides 42, 44 in the region behind the roller blocks 26, 36, which are not visible in Figure 5, on which sections the container 28 lies with its underside. The cross section of the horizontal plastics sections 74, 76 corresponds to that of the perpendicularly disposed plastics sections 62, 64. The container 28 is therefore guided solely on the support regions, formed by the plastics sections 62, 64, 74, 76, of the rails 16, 30 and does not come into contact with the other metallic parts of the rails.

## Claims

1. Transport device for items of equipment in rescue vehicles or similar, wherein a box-shaped equipment container (28) is movable along two rails (16, 30) formed as L-sections disposed in a mutual mirror-image fashion, each L-section comprising a horizontal leg (18, 32) and a perpendicular leg (20, 34), said legs (18, 32; 20, 34) being provided with plastic sections (62, 64; 74, 76) at the respective inner sides facing said container (28), said rails (16, 30) being also provided with stops (22, 40) for the movement of said container (28), and with delivery rollers (24, 38) for guiding the movement of said container (28), **characterized in that** the inner sides of said legs (18, 32; 20, 34) are provided with respective undercut grooves (42, 44; 46, 48) in which said plastic sections (62, 64; 74, 76), said stops (22, 40) and said rollers (24, 38) are removably inserted.

2. Transport device according to claim 1, **characterized in that** said undercut grooves are formed as dovetail guides (42, 44; 46, 48) extended in the longitudinal direction of said legs (18, 32; 20, 34), each said plastic section (62, 64; 74, 76) having a trapezoidal cross section corresponding in shape to said dovetail guides (42, 44; 46, 48).

3. Transport device according to claim 2, **characterized in that** said rollers (24, 38) are carried by respective roller blocks (26, 36), wherein said stops (22, 40) and said roller blocks (26, 36) can be fixed in their position in said dovetail guides ((42, 44; 46, 48) by screws.

4. Transport device according to claim 3, **characterized in that** a number of through-holes or threaded holes for said screws are provided in said undercut grooves (42, 44; 46, 48), said stops (22, 40) and said roller blocks (26, 36) being provided with threaded holes or through holes for said screws.

5. Transport device according to claim 3 or 4, **characterized in that** said stops (20, 40) are fixed at the inner end of said rails (16, 30), said roller blocks (26, 36) being fixed at the outer end of said rails (16, 30).

6. Transport device according to claim 5, **characterized in that** said stops are formed as horizontal stop pins (20, 40) provided with undercut base regions inserted in the dovetail guides (46, 48) of the perpendicularly disposed legs (20, 34) of said rails (16, 30) and corresponding in shape to said dovetail guides (46, 48).

7. Transport device according to claim 5 or 6, **characterized in that** said roller blocks (26, 36) are provided with undercut base regions (50, 52) inserted in the dovetail guides (42, 44) of the horizontally disposed legs (18, 32) of said rails (16, 30) and corresponding in shape to said dovetail guides (42, 44).

## Patentansprüche

1. Transportvorrichtung für Ausrüstungsgegenstände in einem Rettungsfahrzeug oder dergleichen, in welcher ein kastenförmiger Ausrüstungsbehälter (28) längs zweier Schienen (16, 30) bewegbar ist, welche als L-förmige Bereiche zueinander spiegelbildlich angeordnet sind und jeder L-förmige Bereich einen waagerechten Schenkel (18, 32) und einen dazu senkrechten Schenkel (20, 34) enthält und die genannten Schenkel (18, 32; 20, 34) an den zugehörigen Innenseiten mit zum genannten Behälter (28) gerichteten Kunststoffbereichen (62, 64; 74, 76) ausgestattet sind, wobei die genannten Schienen (16, 30) auch mit Anschlägen (22, 40) zur Begrenzung der Bewegung des genannten Behälters (28) und mit Entladerollen (24, 38) für die Führung der Bewegung des genannten Behälters (28) ausgestattet sind, **dadurch gekennzeichnet, dass** die Innenseiten der genannten Schenkel (18, 32; 20, 34) mit zugehörigen unterschnittenen Rillen (42, 44; 46, 48) ausgestattet sind, in welche die genannten Kunststoffbereiche (62, 64; 74, 76), die genannten Anschläge (22, 40) und die genannten Entladerollen (24, 38) herausnehmbar eingesetzt sind.

2. Transportvorrichtung gemäß Anspruch 1, **dadurch gekennzeichnet, dass** die genannten unterschnittenen Rillen als schwalbenschwanzförmige Führungen (42, 44; 46, 48) ausgebildet sind, welche sich in der Längsrichtung der genannten Schenkel (18, 32; 20, 34) erstrecken, wobei jeder genannte Kunststoffbereich (62, 64; 74, 76) einen trapezförmigen Querschnitt aufweist, welcher in seiner Form den genannten schwalbenschwanzförmigen Führungen (42, 44; 46, 48) entspricht.

3. Transportvorrichtung gemäß Anspruch 2, **dadurch gekennzeichnet, dass** die genannten Rollen (24, 38) von zugehörigen Rollenblöcken (26, 36) getragen werden, an welchen die genannten Anschläge (22, 40) und die genannten Rollenblöcke (26, 36) in ihrer Position in den genannten schwalbenschwanzförmigen Führungen (42, 44; 46, 48) mittels Schrauben befestigt werden.

4. Transportvorrichtung gemäß Anspruch 3, **dadurch gekennzeichnet, dass** eine Anzahl von durchgehenden Bohrungen oder Gewindebohrungen für die genannten Schrauben in den genannten unterschnittenen Rillen (42, 44; 46, 48) vorhanden ist, wobei die genannten Anschläge (22, 40) und die genannten Rollenblöcke (26, 36) mit Gewindebohrungen oder durchgehenden Bohrungen für die genannten Schrauben ausgestattet sind.

5. Transportvorrichtung gemäß Anspruch 3 oder 4, **dadurch gekennzeichnet, dass** die genannten Anschläge (22, 40) am inneren Endstück der genannten Schienen (16, 30) befestigt sind und die genannten Rollenblöcke (26, 36) am äußeren Endstück der genannten Schienen (16, 30) befestigt sind.

6. Transportvorrichtung gemäß Anspruch 5, **dadurch gekennzeichnet, dass** die genannten Anschläge als waagerechte Anschlagbolzen (20, 40) ausgebildet sind, welche mit unterschnittenen Sockelbereichen versehen sind, welche in die schwalbenschwanzförmigen Führungen (46, 48) der senkrecht angeordneten Schenkel (20, 34) der genannten Schienen (16, 30) eingesetzt werden und in ihrer Form den genannten schwalbenschwanzförmigen Führungen (46, 48) entsprechen.

7. Transportvorrichtung gemäß Anspruch 5 oder 6, **dadurch gekennzeichnet, dass** die genannten Rollenblöcke (26, 36) mit unterschnittenen Sockelbereichen (50, 52) ausgestattet sind, welche in die schwalbenschwanzförmigen Führungen (42, 44) der waagerecht angeordneten Schenkel (18, 32) der genannten Schienen (16, 30) eingesetzt sind und in ihrer Form den genannten schwalbenschwanzförmigen Führungen (42, 44) entsprechen.

## Revendications

1. Dispositif de transport pour des objets d'équipement dans des véhicules d'intervention ou similaire, où un conteneur d'équipement (28) en forme de boîte est déplaçable le long de deux rails (16, 30) formés comme sections en L disposés selon une image mutuellement spéculairement identique, chaque section en L comprenant une branche horizontale (18, 32) et une branche perpendiculaire (20, 34), lesdites branches (18, 32; 20, 34) présentant des sections en plastique (62, 64; 74, 76) aux côtés internes respectifs orientés vers ledit conteneur (28), lesdits rails (16, 30) présentant également les butées d'arrêt (22, 40) pour le déplacement dudit conteneur (28), et avec des rouleaux de transmission (24, 38) pour guider le déplacement dudit conteneur (28), **caractérisé en ce que** les côtés internes desdites branches (18, 32; 20, 34) présentent des rainures contre-dépouillées respectives (42, 44; 46, 48) dans lesquelles lesdites sections en plastique (62, 64; 74, 76), lesdites butées d'arrêt (22, 40) et lesdits rouleaux (24, 38) sont insérés amoviblement.

2. Dispositif de transport selon la revendication 1, **caractérisé en ce que** lesdites rainures contre-dépouillées sont réalisées comme des guidages en queue d'aronde (42, 44; 46, 48) s'étendant dans la direction longitudinale desdites branches (18, 32; 20, 34), chaque section en plastique précitée (62, 64; 74, 76) ayant une section transversale trapézoïdale dont la forme correspond auxdits guidages en queue d'aronde (42, 44; 46, 48).

3. Dispositif de transport selon la revendication 2, **caractérisé en ce que** lesdits rouleaux (24, 38) sont supportés par des blocs de rouleau respectifs (26, 36), où lesdites butées d'arrêt (22, 40) et lesdits blocs de rouleau (26, 36) peuvent être fixés dans leur position dans lesdits guidages en queue d'aronde (42, 44; 46, 48) par des vis.

4. Dispositif de transport selon la revendication 3, **caractérisé en ce qu'**un nombre de trous traversants ou de trous taraudés pour lesdites vis sont réalisés dans lesdites rainures contre-dépouillées (42, 44; 46, 48), lesdites butées d'arrêt (22, 40) et lesdits blocs de rouleau (26, 36) présentant des trous taraudés ou des trous traversants pour lesdites vis.

5. Dispositif de transport selon la revendication 3 ou 4, **caractérisé en ce que** lesdites butées d'arrêt (20, 40) sont fixées à l'extrémité interne desdits rails (16, 30), lesdits blocs de rouleau (26, 36) étant fixés à l'extrémité externe desdits rails (16, 30).

6. Dispositif de transport selon la revendication 5, **caractérisé en ce que** lesdites butées d'arrêt sont réalisées comme des axes d'arrêt horizontaux (20, 40) pourvus de régions de base contre-dépouillées insérées dans les guidages en queue d'aronde (46, 48) des branches (20, 34) disposées perpendiculairement desdits rails (16, 30) et dont la forme correspond auxdits guidages en queue d'aronde (46, 48).

7. Dispositif de transport selon la revendication 5 ou 6, **caractérisé en ce que** lesdits blocs de rouleau (26, 36) présentent des régions de base contre-dépouillées (50, 52) insérées dans les guidages en queue d'aronde (42, 44) des branches (18, 32) disposées horizontalement desdits rails (16, 30) et dont la forme correspond auxdits guidages en queue d'aronde (42, 44).
